# EUROPÄISCHE PATENTSCHRIFT

(11) **EP 1 910 157 B1**
(45) Veröffentlichungstag und Bekanntmachung des Hinweises auf die Patenterteilung: **28.03.2012**
(21) Anmeldenummer: 06776500.8
(22) Anmeldetag: 29.07.2006
(51) Int. Cl.: B62D 25/08

(54) **MONTAGETRÄGERSYSTEM**
ASSEMBLY SUPPORT SYSTEM
SYSTEME DE SUPPORT DE MONTAGE

(30) Priorität: 06.08.2005 DE 102005039090
(43) Veröffentlichungstag der Anmeldung: 16.04.2008
(73) Patentinhaber: Behr GmbH & Co. KG, 70469 Stuttgart (DE); HBPO GmbH, 59552 Lippstadt (DE)
(72) Erfinder: SPIETH, Michael, 72810 Gomaringen (DE); OPPERBECK, Guido, 59557 Lippstadt (DE); ZEMAN, Ondrej, 160 00 Praha 6 (CZ)
(74) Vertreter: Grauel, Andreas
(86) Internationale Anmeldenummer: PCT/EP2006/007535
(87) Internationale Veröffentlichungsnummer: WO 2007/017151

(56) Entgegenhaltungen:
- EP-A- 1 211 163
- US-A1- 2005 134 093
- US-B1- 6 450 276

## Beschreibung

Die Erfindung betrifft ein Montageträgersystem, insbesondere ein Frontendmodul, für Kühlkomponenten, insbesondere für mindestens einen Wärmeübertrager und mindestens eine Lüfterzarge, mit einem Montageträger gemäß dem Oberbegriff des Anspruchs 1.

Aus dem US-Patent US 6,685,258 B2 ist ein Frontendmodul bekannt, das einen geschlossenen Montagerahmen umfasst, an dem eine Lüfterzarge befestigbar ist. Die Lüfterzarge bildet dabei die Rückwand eines Aufnahmeraums für Kühlkomponenten. Aus dem gattungsgemässen US-Patent US 6,450,276 B1 ist ein Montageträgersystem mit einem Montageträger bekannt, der im Wesentlichen U-förmig ausgebildet ist und eine Basis aufweist, von der zwei Schenkel ausgehen, deren Enden durch einen separaten Verbindungsträger verbunden sind. Ähnliche Montageträgersysteme sind aus der US-Patentanmeldung US 2005/0134093 A1 und der europäischen Patentanmeldung EP 1 211 163 A2 bekannt.

Aufgabe der Erfindung ist es, ein Montageträgersystem gemäß dem Oberbegriff des Anspruchs 1 zu schaffen, durch das die Vormontage der Kühlkomponenten vereinfacht wird.

Die Aufgabe wird durch ein Montageträgersystem gemäß Patentanspruch 1 gelöst. Vor der Montage ist der Montageträger nicht an den Enden durch den Verbindungsträger verbunden und demzufolge an einer Seite offen. Dadurch wird die Montage der Kühlkomponenten erheblich vereinfacht, und können Toleranzen sowohl in seitlicher beziehungsweise vertikaler Richtung als auch in Fahrzeuglängsrichtung ausgeglichen werden. Nach der Montage vervollständigt der Verbindungsträger den Montageträger zu einem geschlossenen Montageträgerrahmen, in dem die Kühlkomponenten aufgenommen sind. Das erfindungsgemäße Montageträgersystem ermöglicht eine Vormontage außerhalb der Montagelinie eines Kraftfahrzeugs mit nur einer Hauptmontagerichtung. Die vorliegende Erfindung ist vorzugsweise auf die Verwendung von Ganzmetallkühlkomponenten ohne zusätzlich angelötete Befestigungsmittel innerhalb des Montageträgersystems gerichtet. Der Verbindungsträger hat einen im Wesentlichen L-förmigen Querschnitt mit einem ersten Arm, insbesondere einem kurzen Arm, der einen Verbindungssteg zwischen den Enden der beiden Schenkel bildet, und mit einem zweiten Arm, insbesondere einem langen Arm. Der lange Arm des Verbindungsträgers bildet eine Abschlusswand oder Rückwand eines Aufnahmeraums für Kühlkomponenten. Der durch die L-förmige Rückwand geschlossene Montageträger bildet einen biegesteifen Verbund, der nach der Montage am Fahrzeug einen zusätzlichen Schubverbund für das Fahrzeug darstellt.

Ein bevorzugtes Ausführungsbeispiel des Montageträgersystems ist dadurch gekennzeichnet, dass sich die beiden Schenkel des Montageträgers im eingebauten Zustand des Montageträgersystems nach unten erstrecken. Die Richtungsangabe bezieht sich zum Beispiel auf ein Kraftfahrzeug, in welches das erfindungsgemäße Montageträgersystem eingebaut ist. Nach unten bedeutet in diesem Zusammenhang in vertikaler Richtung zum Fahrzeugboden hin.

Ein weiteres bevorzugtes Ausführungsbeispiel des Montageträgersystems ist dadurch gekennzeichnet, dass der erste Arm des Verbindungsträgers eine Tragfläche für mindestens eine Kühlkomponente, insbesondere für mindestens einen Wärmeübertrager, aufweist. Durch die Tragfläche werden vorzugsweise mehrere Wärmeübertrager in vertikaler Richtung gehalten beziehungsweise gelagert.

Ein weiteres bevorzugtes Äusführungsbeispiel des Montageträgersystems ist dadurch gekennzeichnet, dass sich der erste Arm des Verbindungsträgers in Fahrzeuglängsrichtung von hinten nach vorne erstreckt. Dadurch wird ein Entfernen des Montageträgers im eingebauten Zustand des Montageträgersystems ermöglicht, ohne dass der Verbindungsträger mit den Kühlkomponenten ausgebaut werden muss. Das liefert den Vorteil, dass die Kühlkreisläufe beim Entfernen des Montageträgers nicht geöffnet werden müssen.

Ein weiteres bevorzugtes Ausführungsbeispiel des Montageträgersystems ist dadurch gekennzeichnet, dass die Tragfläche für die Kühlkomponente, insbesondere für den Wärmeübertrager, mindestens einen Formschlussbereich zur formschlüssigen Aufnahme eines komplementär ausgebildeten Bereichs der Kühlkomponente aufweist. Dadurch wird die Kühlkomponente in Fahrzeuglängsrichtung gesichert.

Ein weiteres bevorzugtes Ausführungsbeispiel des Montageträgersystems ist dadurch gekennzeichnet, dass die Basis des Montageträgers auf der der Kühlkomponente zugewandten Seite Halteelemente aufweist, welche die Kühlkomponente in Fahrzeuglängsrichtung fixieren. Die Halteelemente werden vorzugsweise von Positionierrippen gebildet, die an dem Wärmeübertrager anliegen oder zwischen zwei Wärmeübertragern angeordnet sind.

Ein weiteres bevorzugtes Ausführungsbeispiel des Montageträgersystems ist dadurch gekennzeichnet, dass die Basis des Montageträgers auf der der Kühlkomponente zugewandten Seite Federelemente aufweist, die gegen die Kühlkomponente vorgespannt sind. Dadurch wird eine spielfreie Lagerung der Kühlkomponente gewährleistet.

Ein weiteres bevorzugtes Ausführungsbeispiel des Montageträgersystems ist dadurch gekennzeichnet, dass der Verbindungsträger an den Enden der Schenkel des Montageträgers befestigt ist. Der Verbindungsträger ist vorzugsweise lösbar, das heißt zerstörungsfrei trennbar, an den Enden der Schenkel des Montageträgers befestigt. Zur Befestigung dienen zum Beispiel Schraub-, Klips- oder Nietverbindungen.

Ein weiteres bevorzugtes Ausführungsbeispiel des Montageträgersystems ist dadurch gekennzeichnet, dass seitlich und/oder oben zwischen der Kühlkomponente und dem Montageträger jeweils mindestens ein elastisches Dichtelement angeordnet ist. Das Dichtelement dient auch zum Ausgleich von Toleranzen.

Ein weiteres bevorzugtes Ausführungsbeispiel des Montageträgersystems ist dadurch gekennzeichnet, dass mehrere Wärmeübertrager so auf dem die Tragfläche aufweisenden ersten Arm des Verbindungsträgers angeordnet sind, dass sie von dem Montageträger umgriffen werden. Die Vormontage des erfindungsgemäßen Montageträgersystems beziehungsweise Frontends wird vorzugsweise in der Reihenfolge in Fahrzeuglängsrichtung von hinten nach vorne vorgenommen. Bei der Vormontage wird zuerst der Verbindungsträger in eine Montagehilfsvorrichtung gelegt. Der Verbindungsträger weist vorzugsweise eine Aufnahmemöglichkeit für einen oder mehrere Kühllüfter und weitere Einrichtungen, wie zum Beispiel Lüfterklappen zur Öffnung bei hohem Staudruck, auf. Die Tragfläche ist zur Aufnahme und Abstützung der Kühlkomponenten ausgebildet. Gemäß einem Aspekt der Erfindung sind in der Tragfläche des Verbindungsträgers Einformungen vorgesehen, die bereits in einem Spritzgießprozess bei der Herstellung des Verbindungsträgers mit eingeformt werden. Entsprechend ausgebildete komplementäre Gegenstücke in geometrisch einfacher Form sind an den Kühlkomponenten vorgesehen. Nach dem Aufsetzen der Kühlkomponenten auf die Tragfläche des Verbindungsträgers sind die Kühlkomponenten durch die formschlüssige Verbindung sowohl nach unten als auch in Fahrzeuglängsrichtung fixiert.

Ein weiteres bevorzugtes Ausführungsbeispiel des Montageträgersystems ist dadurch gekennzeichnet, dass der zweite Arm des Verbindungsträgers eine Rückwand bildet, die eine Lüfterzarge umfasst. Vorzugsweise umfasst die Rückwand auch einen Lüftermotor und weitere Einrichtungen, wie zum Beispiel Lüfterklappen.

Ein weiteres bevorzugtes Ausführungsbeispiel des Montageträgersystems ist dadurch gekennzeichnet, dass der Montageträger und der Verbindungsträger von einem Spritzgießteil gebildet werden. Der Montageträger ist vorzugsweise in Hybridbauweise im Spritzgießverfahren hergestellt. Der Verbindungsträger ist ebenfalls vorzugsweise im Spritzgießverfahren hergestellt. Der Montageträger und der Verbindungsträger sind vorzugsweise aus Kunststoff gebildet, wobei je nach Notwendigkeit eine metallische Verstärkung im Bereich des ersten Arms des Verbindungsträgers vorgesehen ist.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine perspektivische Explosionsdarstellung eines erfindungsgemäßen Montageträgersystems;
- Figur 2: das Montageträgersystem aus Figur 1 im Längsschnitt vor dem Zusammenbau;
- Figur 3: einen vergrößerten Ausschnitt des Montageträgersystems aus Figur 1 im zusammengebauten Zustand im Längsschnitt;
- Figur 4a: das Montageträgersystem aus Figur 1 im zusammengebauten Zustand im Längsschnitt;
- Figur 4b: das Montageträgersystem aus Figur 1 im Schnitt durch einen Wärmeübertrager und
- Figur 5: das Montagesystem aus Figur 1 im Schnitt durch einen anderen Wärmeübertrager wie in Figur 4b.

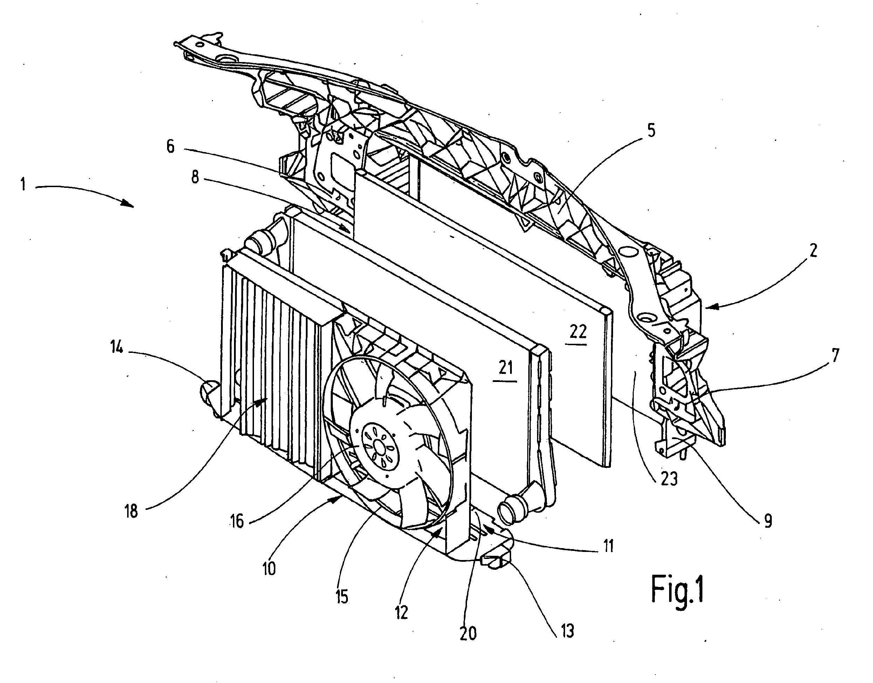

In Figur 1 ist ein erfindungsgemäßes Montageträgersystem 1 in Explosionsdarstellung perspektivisch dargestellt. Das Montageträgersystem 1 umfasst einen Montageträger 2, der im Wesentlichen U-förmig ausgebildet ist. Der Montageträger 2 umfasst eine Basis 5, von der sich zwei Schenkel 6, 7 nach unten erstrecken. Die freien Enden 8, 9 der Schenkel 6, 7 sind durch einen Verbindungsträger 10 verbindbar. Der Verbindungsträger 10 hat einen im Wesentlichen L-förmigen Querschnitt mit einem ersten, kurzen Arm 11 und einem zweiten, langen Arm 12. An den seitlichen Enden des ersten Arms 11 weist der Verbindungsträger 10 jeweils ein Befestigungselement 13, 14 auf. Die Befestigungselemente 13, 14 dienen dazu, den Verbindungsträger 10 an den Enden 8, 9 der Schenkel 6, 7 des Montageträgers 2 zu befestigen. Der erste, kurze Arm 11 des Verbindungsträgers 10 bildet im eingebauten Zustand einen Verbindungssteg 11 zwischen den freien Enden 8, 9 der Schenkel 6, 7 des Montageträgers 2.

Der zweite, lange Arm 12 des Verbindungsträgers 10 bildet eine Rückwand eines Kühlkomponenten Aufnahmeraums, der von dem Montageträger 2 zwischen den Schenkeln 6, 7 begrenzt wird. Die von dem zweiten, langen Arm 12 des Verbindungsträgers 10 gebildete Rückwand umfasst eine Lüfterzarge 15 mit einem Lüfterrad 16 und einem zugehörigen Lüftermotor. Des Weiteren umfasst die Rückwand Lüfterklappen 18.

Der den Verbindungssteg bildende erste, kurze Arm 11 des Verbindungsträgers 10 weist eine Tragfläche 20 für drei Wärmeübertrager 21, 22 und 23 auf. Bei dem Wärmeübertrager 21 handelt es sich um einen Wasserkühler. Bei dem Wärmeübertrager 22 handelt es sich um einen Niedertemperaturkühler. Bei dem Wärmeübertrager 23 handelt es sich um einen Klimakondensator. Die Wärmeübertrager 21 bis 23, die auch als Kühlkomponenten bezeichnet werden, werden gemäß einem wesentlichen Aspekt der vorliegenden Erfindung auf der Tragfläche 20 des Verbindungsträgers 10 vormontiert. Das vormontierte System mit dem Verbindungsträger 10 und den drei Wärmeübertragern 21 bis 23 wird durch die Montage des Montageträgers 2 geschlossen. Beim Zusammenbau des Montageträgers 2 mit dem Verbindungsträger 10 werden die Kühlkomponenten 21 bis 23 in dem Montagesystem 1 fixiert.

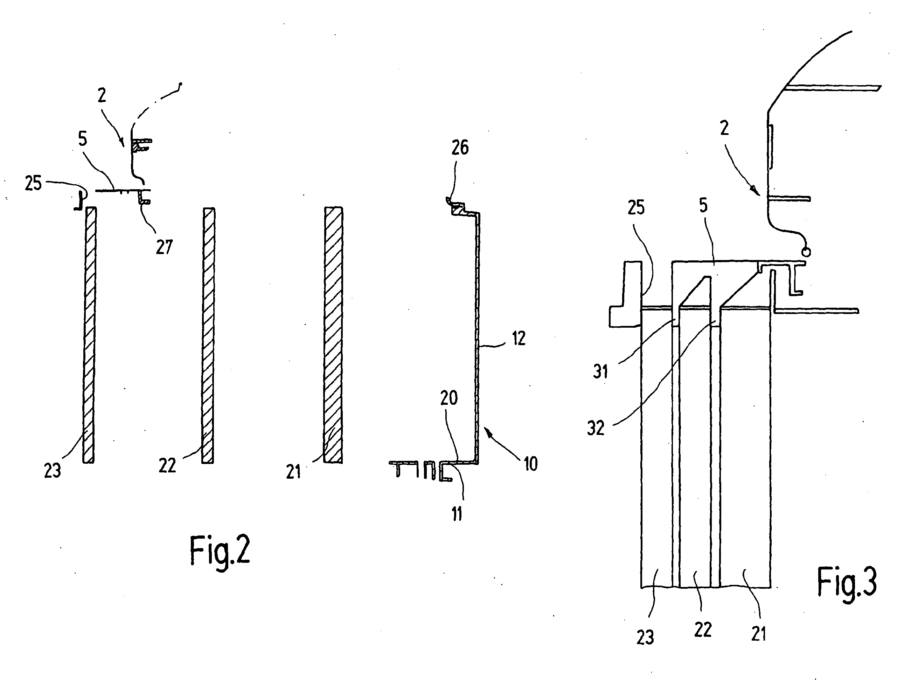

In Figur 2 ist das Montageträgersystem 1 aus Figur 1 im Längsschnitt dargestellt. In der Längsschnittansicht sieht man, dass am vorderen Ende des Montageträgers 2 eine Anschlagleiste 25 für das obere Ende des Wärmeübertragers 23 ausgebildet ist. Außerdem sieht man, dass am oberen Ende des zweiten, langen Arms 12 des Verbindungsträgers 10 ein nach oben gekrümmter Haltefinger 26 ausgebildet ist, der im zusammengebauten Zustand von dem Montageträger 2 und dem Verbindungsträger 10 einen Vorsprung 27 an dem Montageträger 2 hintergreift.

In Figur 3 ist ein Ausschnitt des Montageträgersystems aus Figur 1 in vergrößertem Längsschnitt dargestellt. In Figur 3 sieht man, dass an der Basis 5 des Montageträgers 2 Positionierrippen 31, 32 nach unten vorstehen. Die Positionierrippe 31 ist zwischen den Wärmeübertragern 23 und 22 angeordnet und dient dazu, die beiden Wärmeübertrager 23, 22 in Fahrzeuglängsrichtung zu fixieren.

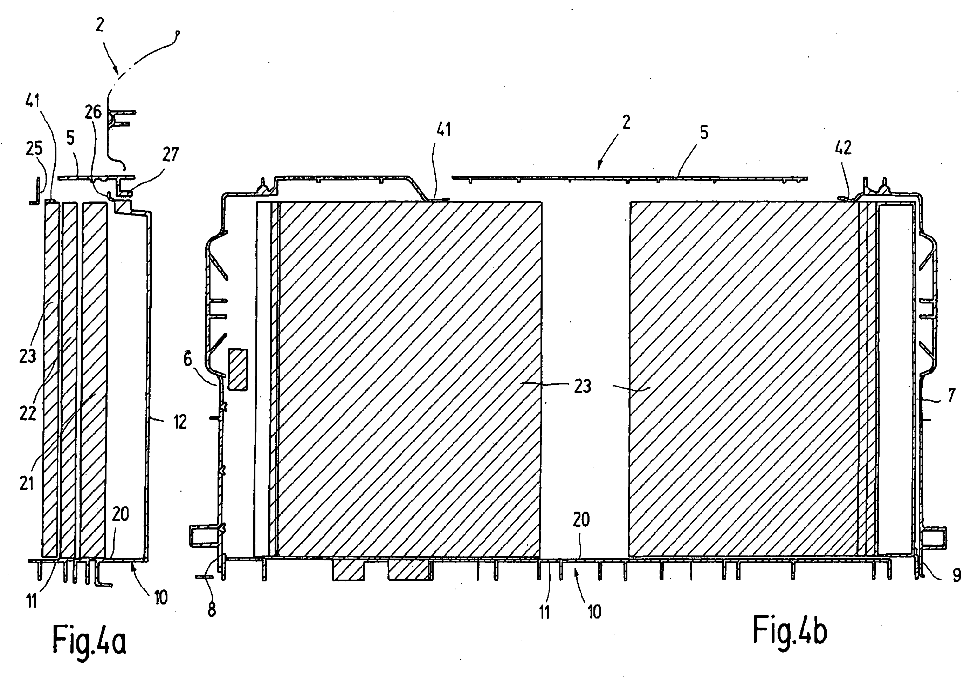

In den Figuren 4a und 4b ist das erfindungsgemäße Montageträgersystem in verschiedenen Schnittansichten im zusammengebauten Zustand dargestellt. Die Wärmeübertrager 21 bis 23 werden von dem Montageträger 2 und dem Verbindungsträger 10 in Form eines geschlossenen Rahmens an ihrem Umfang umschlossen. An der Basis 5 des Montageträgers 2 sind Federelemente 41, 42 vorgesehen, durch welche der Wärmeübertrager 23 in vertikaler Richtung fixiert wird.

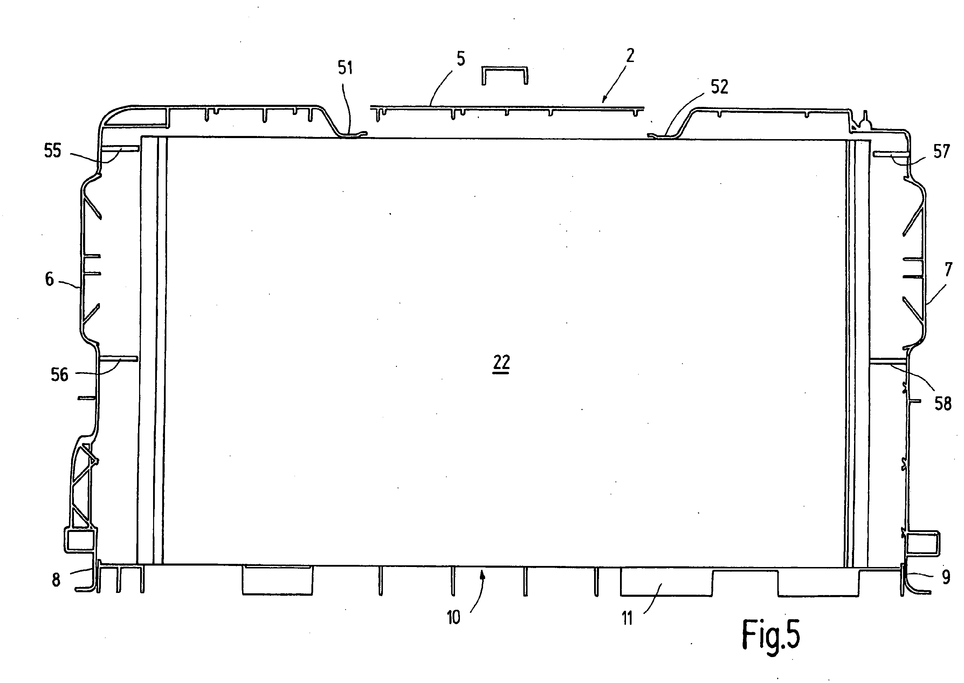

In Figur 5 ist ein ähnlicher Schnitt wie in Figur 4b an einer anderen Stelle dargestellt. In Figur 5 sieht man, dass oben an dem Wärmeübertrager 22 ebenfalls Federelemente 51, 52 anliegen, die von der Basis 5 des Montageträgers 2 ausgehen. Des Weiteren wird der Wärmeübertrager 22 seitlich durch Rippen 55, 56 und 57, 58 in Position gehalten, die an dem Schenkel 6 und dem Schenkel 7 des Montageträgers 2 ausgebildet sind. Die Rippen 55, 58 sind vorzugsweise in der Hauptentformungsrichtung eines zur Herstellung des Montageträgers 2 verwendeten Spritzgießwerkzeugs angeordnet. Je nach Gestaltung und Anordnung der Rippen beziehungsweise Federelemente werden Schieber eingesetzt, um die Entformbarkeit zu gewährleisten.

Das erfindungsgemäße Montageträgersystem 1 wird, in Fahrtrichtung betrachtet, in der Reihenfolge von hinten nach vorne vorgenommen. Zunächst wird die L-förmige Rückwand mit der Aufnahmemöglichkeit für einen oder mehrere Kühllüfter und für weitere Einrichtungen, wie zum Beispiel Lüfterklappen zur Öffnung bei hohem Staudruck, in eine Montagehilfsvorrichtung gelegt. Der erste, kurze Arm 11 des Verbindungsträgers 10 bildet die Tragfläche 20 für die Kühlkomponenten 21 bis 23. Gemäß einem Aspekt der vorliegenden Erfindung sind in der Tragfläche 20 Formschlussbereiche zur formschlüssigen Aufnahme von komplementär ausgebildeten Bereichen der Kühlkomponenten vorgesehen.

Um den thermischen Wirkungsgrad der montierten Kühlkomponenten 21 bis 23 zu erhöhen, kann ein seitliches und/oder oberes Abdichtungsprofil verwendet werden, das vorzugsweise einteilig, U-förmig die einzelnen Kühlkomponenten seitlich umschließt und gleichzeitig den Ausgleich von Toleranzen ermöglicht.

Wenn alle Kühlkomponenten 21 bis 23 von hinten nach vorne auf die Tragfläche 20 aufgesetzt wurden, dann kann der Montageträger 2 als Verschluss auf den Verbindungsträger 10 mit den Kühlkomponenten 21 bis 23 aufgesetzt werden. Ähnlich wie die Verankerungen der Kühlkomponenten 21 bis 23 unten in der Tragfläche 20 des Verbindungsträgers 10 greifen auch oben vergleichbare Halteeinrichtungen der Kühlkomponenten in den von vorne oben aufzusetzenden Montageträger 2 ein. Der nach unten offene U-förmige Montageträger 2 ist mit den daran anliegenden Kühlkomponenten so abgestimmt, dass eine spielfreie Verbindung zwischen den Kühlkomponenten und dem Verbindungsträger gewährleistet ist.

Zur spielfreien Lagerung der Kühlkomponenten in vertikaler Richtung ist der Montageträger 2 an der Unterseite der Basis 5 mit den daran angeformten Federelementen 41, 42, 51, 52 ausgestattet. Der Montageträger 2 wird in montagegünstiger Position von vorne im unteren Bereich durch Schrauben, Klipsen, Nieten etc. mit dem Verbindungsträger 10 verbunden. Der mit dem Verbindungsträger 10 verbundene Montageträger 2 bildet nach dem kraft-und/oder formschlüssigen Schließen einen abgedichteten Kasten um die Kühlkomponenten 21 bis 23 mit der gewünschten Anströmfläche von vorne und den vorgesehenen Entlüftungsflächen an der Rückseite. Der mit dem Verbindungsträger geschlossene Montageträger 2 bildet einen biegesteifen Verbund, der nach der Montage am Fahrzeug einen zusätzlichen Schubverbund für das Fahrzeug darstellt.

Das erfindungsgemäße Montageträgersystem kann leicht an die Anzahl und die Leistungsgröße von verschiedenen Kühlkomponenten innerhalb einer Bauserie mit unterschiedlichen Motorisierungen beziehungsweise Ausstattungen eines Kraftfahrzeugs angepasst werden, ohne dass größere Werkzeugkosten anfallen.

Der Montageträger 2 und der Verbindungsträger 10 werden vorzugsweise in Hybridbauweise aus Kunststoff mit Metalleinlegeteilen im Spritzgießverfahren hergestellt. Durch das erfindungsgemäße Montageträgersystem wird eine einheitliche Montagerichtung von hinten beginnend nach vorne/oben ermöglicht. Auf Montagemittel zur Befestigung der Kühlkomponenten kann verzichtet werden. Die Kühlkomponenten werden durch Rippen an dem Montageträger und Vertiefungen in der Tragfläche für Kühlkomponenten in dem Montageträgersystem fixiert. Die L-förmige Rückwand mit der Lüfterzarge bildet mit dem Montageträger 2 einen geschlossenen Montageraum für die Kühlkomponenten mit einer vorbestimmten Luftführung.

## Patentansprüche

1. Montageträgersystem, insbesondere Frontendmodul, für Kühlkomponenten (21-23), insbesondere für mindestens einen Wärmeübertrager (21-23) und mindestens eine Lüfterzarge (15), mit einem Montageträger (2), wobei der Montageträger (2) im Wesentlichen U-förmig ausgebildet ist und eine Basis (5) aufweist, von der zwei Schenkel (6,7) ausgehen, deren Enden (8,9) durch einen separaten Verbindungsträger (10) verbunden sind, **dadurch gekennzeichnet, dass** seitlich und/oder oben zwischen der Kühlkomponente (21-23) und dem Montageträger (2) jeweils mindestens ein elastisches Dichtelement angeordnet ist und das Dichtelement einen im Wesentlichen U-förmigen Querschnitt aufweist, der die Kühlkomponente umgreift.

2. Montageträgersystem nach Anspruch 1, **dadurch gekennzeichnet, dass** sich die beiden Schenkel (6,7) des Montageträgers (2) im eingebauten Zustand des Montageträgersystems (1) nach unten erstrecken.

3. Montageträgersystem nach einem der vorhergehenden Ansprüche, **dadurch gekennzeichnet, dass** der Verbindungsträger (10) einen im Wesentlichen L-förmigen Querschnitt mit einem ersten Arm (11) aufweist, insbesondere einem kurzen Arm, der einen Verbindungssteg zwischen den Enden (8,9) der beiden Schenkel (6,7) bildet, und mit einem zweiten Arm (12), insbesondere einen langen Arm.

4. Montageträgersystem nach Anspruch 3, **dadurch gekennzeichnet, dass** der erste Arm (11) des Verbindungsträgers (10) eine Tragfläche (20) für mindestens eine Kühlkomponente (21-23), insbesondere für mindestens einen Wärmeübertrager, aufweist.

5. Montageträgersystem nach Anspruch 3 oder 4, **dadurch gekennzeichnet, dass** sich der erste Arm (11) des Verblndungsträgers (10) in Fahrzeuglängsrichtung von hinten nach vorne erstreckt.

6. Montageträgersystem nach Anspruch 4 oder 5, **dadurch gekennzeichnet, dass** die Tragfläche (20) für die Kühlkomponente (21-23), insbesondere für den Wärmeübertrager, mindestens einen Formschlussbereich zur formschlüssigen Aufnahme eines komplementär ausgebildeten Bereichs der Kühlkomponente aufweist.

7. Montageträgersystem nach einem der vorhergehenden Ansprüche, **dadurch gekennzeichnet, dass** die Basis (5) des Montageträgers (2) auf der der Kühlkomponente (21-23) zugewandten Seite Halteelemente (31,32) aufweist, welche die Kühlkomponente (21-23) in Fahrzeuglängsrichtung fixieren.

8. Montageträgersystem nach einem der vorhergehenden Ansprüche, **dadurch gekennzeichnet, dass** die Basis (5) des Montageträgers (2) auf der der Kühlkomponente (21-23) zugewandten Seite Federelemente (41,42,61-52) aufweist, die gegen die Kühlkomponente vorgespannt sind.

9. Montageträgersystem nach einem der vorhergehenden Ansprüche, **dadurch gekennzeichnet, dass** der Verbindungsträger (10) an den Enden (8,9) der Schenkel (6,7) des Montageträgers (2) befestigt ist.

10. Montageträgersystem nach einem der Anspruche 1 bis 9, **dadurch gekennzeichnet, dass** mehrere Wärmeübertrager (21-23) so auf dem die Tragfläche (20) aufweisenden ersten Arm (11) des Verbindungsträgers (10) angeordnet sind, dass sie von dem Montageträger (2) umgriffen werden.

11. Montageträgersystem nach einem der Ansprüche 1 bis 10, **dadurch gekennzeichnet, dass** der zweite Arm (12) des Verbindungsträgers (10) eine Rückwand bildet, die eine Lüfterzarge (15) umfasst.

12. Montageträgersystem nach einem der vorhergehenden Ansprüche, **dadurch gekennzeichnet, dass** der Montageträger (2) und der Verbindungsträger (10) von einem Spritzgießteil gebildet werden.

## Claims

1. An assemble support system, particularly a front end module, for cooling components (21-23), particularly for at least one heat exchanger (21-23) and at least one fan frame (15), having an assembly support (2), wherein the assembly support (2) is embodied as essentially U-shaped and has a base (5), from which two legs (6, 7) project, the ends (8, 9) of which are connected by a separate connecting support (10), **characterized in that** at the side and/or at the top between each of the coaling components (21-23) and the assembly support (2) at least one flexible sealing element is arranged, and the sealing element has a substantially U-shaped cross-section, which encompasses the cooling components.

2. The assembly support system according to claim 1, **characterized in that** the two legs (6, 7) of the assembly support (2) extend downward when the assembly support system is in the assembled state.

3. The assembly support system according to any one of the preceding claims, **characterized in that** the connecting support (10) has a substantially L-shaped cross-section with a first arm (11), particularly a short arm, which forms a connecting land between the ends (8, 9) of the two legs (6, 7), and with a second arm (12), particularly a long arm.

4. The assemble support system according to claim 3, **characterized in that** the first arm (11) of the connecting support (10) has a support surface (20) for at least one cooling component (21-23), particularly for at least once heat exchanger.

5. The assemble support system according to claim 3 or 4, **characterized in that** the first arm (11) of the connecting support (10) extends from the rear toward the front in the longitudinal direction of the vehicle.

6. The assembly support system according to claim 4 or 5, **characterized in that** the support surface (20) for the cooling components (21-23), particularly for the heat exchanger, has at least one interlocking legion for molding a complementarily formed region of the cooling components in an interlocking fashion.

7. The assemble support system according two any one of the preceding claim, **characterized in that** the base (5) of the assembly support (2) has retaining elements (31, 32) on the side thereof that faces the cooling components (21-23), which retailing elements immobilize the cooling components (21-23) in the longitudinal direction of the vehicle.

8. The assembly support system according to any one of the preceding claims, **characterized in that** the base (5) of the assembly support (2) has spring elements (41, 42, 51-52) on the side thereof that faces the cooling components (21-23), which spring elements are prestressed against the cooling components.

9. The assembly support system according to any one of the preceding claims, **characterized in that** the connecting support (10) is attached to the ends (8, 9) of the legs (6, 7) of the assembly support (2).

10. The assembly support system according to any one of claims 1 to 9, **characterized in that** a plurality of heat exchangers (21-23) are arranged on the first arm (11) of the connecting support (10) having the support surface (20), such that said heat exchangers are encompassed by the assembly support (2).

11. The assembly support system according to any one of claims 1 to 10, **characterized in that** the second arm (12) of the connecting support (10) forms a rear wall, which comprises a fan frame (15).

12. The assembly support system according to any one of the preceding claim, **characterized in that** the assembly support (2) and the connecting support (10) are formed by an injection molded piece.

## Revendications

1. Système de support de Montage, en particulier module d'extrémité avant, pour des composants de refroidissement (21 - 23), en particulier pour au moins un échangeur de chaleur (21 - 23) et au moins une virole de ventilateur (15), ledit système comprenant un support de montagne (2), où le support de montagne (2) est configuré sensiblement en forme de U et présente une base (5) de laquelle partent deux branches (6, 7) dont les extrémités (8, 9) sont reliées par un support d'assemblage (10) séparé,
**caractérisé en ce qu'**au moins un élément d'étanchéité élastique est disposé à chaque fois latéralement et / ou sur le dessus, entre le composant de refroidissement (21 - 23) et le support de Montage (2), et l'élément d'étanchéité présente une section sensiblement en forme de U qui enveloppe le composant de refroidissement.

2. Système de support de montagne selon la revendication 1, **caractérisé en ce que** les deux branches (6, 7) du support de montagne (2), une fois que le système du support de montagne (1) a été monté, s'étendent vers le bas.

3. Système de support de montagne selon l'une ou l'autre des revendications précédentes, **caractérisé en ce que** le support d'assemblage (10) présente une section sensiblement en forme de L comportant un premier bras (11), en particulier un bras court qui forme une traverse de jonction entre les extrémités (8, 9) des deux branches (6, 7), et comportent un deuxième bras (12), en particulier un bras long.

4. Système de support de montage selon la revendication 3, **caractérisé en ce que** le premier bras (11) du support d'assemblage (10) présente une surface d'appui (20) pour au moins un composant de refroidissement (21 - 23), en particulier pour au moins un échangeur de chaleur.

5. Système de support de montagne selon la revendication 3 ou 4, **caractérisé en ce que** le premier bras (11) du support d'assemblage (10) s'étend, dans le sens de la longueur du véhicule, de l'arrière vers l'avant.

6. Système de support de montagne selon la revendication 4 ou 5, **caractérisé en ce que** la surface d'appui (20) présente pour le composant de refroidissement (21 - 23), en particulier pour l'échangeur de chaleur, au moins une zone d'assemblage par conformation servant au logement, par complémentarité de forme, d'une zone - configurée de façon complémentaire - du composant de refroidissement.

7. Système de support de montagne selon l'une quelconque des revendication précédentes, **caractérisé en ce que** la base (5) du support de Montage (2) présente, sur le côté tourné vers le composant de refroidissement (21 - 23), des éléments de retenue (31, 32) qui fixent le composant de refroidissement (21 - 23) dans le sens de la longueur du véhicule.

8. Système de support de montage selon l'une quelconque des revendication précédentes, **caractérisé en ce que** la base (5) du support de montage (2) présente, sur le côté tourné vers le composant de refroidissement (21 - 23), des éléments flexibles (41, 42, 51, 52) qui sont précontraints contre le composent de refroidissement.

9. Système de support de montagne selon l'une quelconque des revendications précédentes, **caractérisé en ce que** le support d'assemblage (10) est fixé sur les extrémités (8, 9) des branches (6, 7) du support de montage (2).

10. Système de support de montagne selon l'une quelconque des revendications 1 à 9, **caractérisé en ce que** plusieurs échangeur de chaleur (21 - 23) sont disposés sur le premier bras (11) - présentant la surface d'appui (20) - du support d'assemblage (10), de manière telle qu'ils soient enveloppés par le support de montage (2).

11. Système de support de montage selon l'une quelconque des revendications 1 à 10, **caractérisé en ce que** le deuxième bras (12) du support d'assemblage (10) forme une paroi arrière qui comprend une virole de ventilateur (15).

12. Système de support de montage selon l'une quelconque des revendications précédentes, **caractérisé en ce que** le support de montage (2) et le support d'assemblage (10) sont formés par une pièce moulée par injection.
